# EUROPEAN PATENT APPLICATION

(11) **EP 2 075 873 A1**
(43) Date of publication of application: **01.07.2009**
(21) Application number: 08254127.7
(22) Date of filing: 23.12.2008
(51) Int. Cl.: H01M 10/50, B60H 1/00

(54) **Battery temperature control device of vehicle**

(30) Priority: 26.12.2007 JP 2007334759
(71) Applicant: Calsonic Kansei Corporation, Saitama-shi Saitama 331-8501 (JP)
(72) Inventor: Yanaka, Takuya, Saitama-shi, Saitama-ken 331-8501 (JP)
(74) Representative: Oxley, Robin John George

(57) **Abstract**

A battery temperature control device (1) of a vehicle includes a battery (12), a vehicle-interior side air introducing means (4, 5), a cooling unit (8), an air refluxing means (A7) and a control unit (15). The battery (12) is mounted on the vehicle. The vehicle-interior side air introducing means (4, 5) is capable of introducing air from a passenger compartment (R) of the vehicle. The cooling unit (8) is disposed in the vehicle-interior side air introducing means (4, 5) to cool the air. The air refluxing means (A7) is capable of refluxing the air that has passed through the battery (12) to the passenger compartment (R). The control unit (15) is capable of controlling the air refluxing means (A7) to allow and forbid a communication between the air refluxing means (A7) and the passenger compartment (R) according to a temperature (TB) of the battery (12).

## Description

The present invention relates to a battery temperature control device of a vehicle that can cool a battery mounted on the vehicle such as a hybrid electric vehicle and an electric vehicle.

The hybrid electric vehicles and electric vehicles are driven by an electric motor, which is supplied with electric power from second batteries, namely rechargeable batteries, such as nickel-cadmium batteries, nickel hydride batteries or lithium-ion batteries.

When the batteries generate heat due to chemical reaction therein so that the temperature of the batteries rises high, the discharge and charge efficiency of the batteries falls. In order to avoid such a problem by cooling the batteries, a battery temperature control device is provided to guide the cooling air generated by a rear-seat side air conditioning system to a case containing the batteries. Such a technology is disclosed in Japanese Patent Applications Laid-Open Publication No. 2004 - 1674 and No. 2007 - 185997.

The above known conventional battery temperature control device, however, has problems in that the air-conditioning efficiency in the interior of the vehicle deteriorates and the pressure in the interior, namely a passenger compartment, becomes negative when the batteries are cooled down, because the air that has passed through the batteries is discharged into a luggage compartment or to the exterior of the vehicle.

The present invention seeks to provide a battery temperature control device which overcomes or ameliorates at least one of the disadvantages of the prior art. Preferably, embodiments of the invention seek to overcome the foregoing drawbacks and can maintain a battery at a desirable temperature, thereby improving the air-conditioning efficiency in an interior of the vehicle, and also can prevent the pressure in an interior thereof from becoming negative.

According to a first aspect of the present invention there is provided a battery temperature control device of a vehicle, the device including a battery, a vehicle-interior side air introducing means, a cooling unit, an air refluxing means and a control unit. The battery is mounted on the vehicle. The vehicle-interior side air introducing means is capable of introducing air from a passenger compartment of the vehicle. The cooling unit is disposed in the vehicle-interior side air introducing means to cool the air. The air refluxing means is capable of refluxing the air that has passed through the battery to the passenger compartment. The control unit is capable of controlling the air refluxing means to allow and substantially prevent communication between the air refluxing means and the passenger compartment according to a temperature of the battery.

Therefore, the battery temperature control device of the present invention may maintain the battery within desirable temperatures, namely the lower and upper predetermined temperatures, thereby improving the air-conditioning efficiency in the interior of the vehicle. In addition, it may prevent the pressure in the interior thereof from becoming negative.

The features and advantages of the present invention will become apparent as the description proceeds when taken in conjunction with the accompanying drawings, in which:
FIG. 1 is a schematic diagram showing a battery temperature control device of an embodiment according to the present invention;
FIG. 2 is a schematic diagram showing a front-seat side air conditioning unit and a rear-seat side air-conditioning unit that are used for the battery temperature control device of the embodiment to form a refrigeration cycle circuit;
FIG. 3 is a diagram showing a control system that is used for the battery temperature control device of the embodiment;
FIG. 4 is a diagram explaining control ranges that are classified based on a relationship between the temperature of a battery and the temperature of the air of the air conditioning unit;
FIG. 5 is a schematic diagram illustrating an operation state of the battery temperature control device of the embodiment when the temperature of the battery is low and a passenger compartment is being warmed up;
FIG. 6 is a schematic diagram illustrating an operation state of the battery temperature control device when the temperature of the battery is within a lower predetermined temperature and an upper predetermined temperature and the air is being circulated between the passenger compartment and the battery temperature control device;
FIG. 7 is a schematic diagram illustrating an operation state of the battery temperature control device when the temperature of the battery is high and the passenger compartment is being cooled down; and

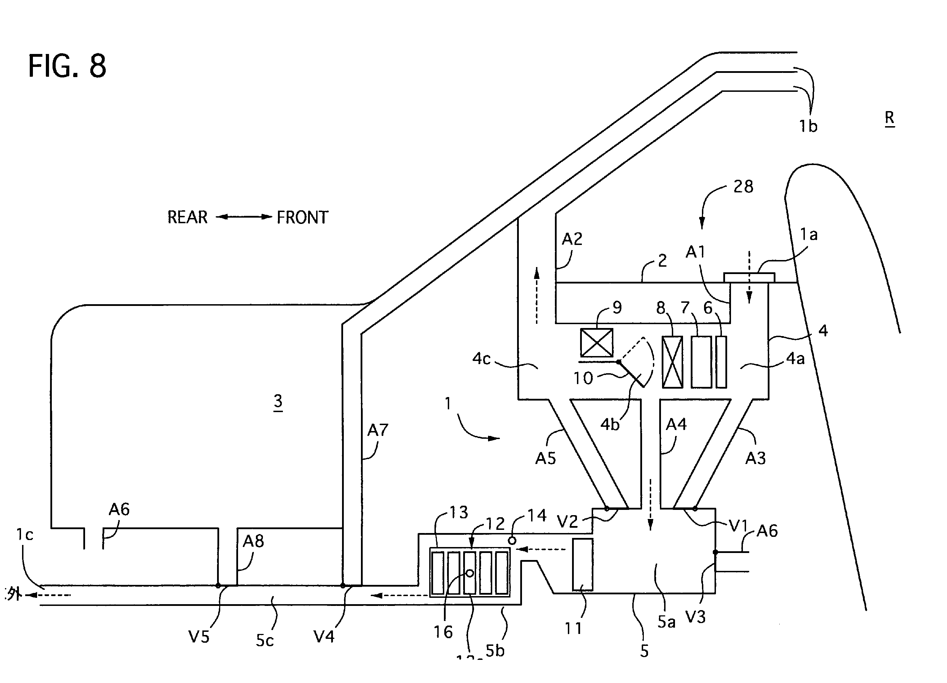

FIG. 8 is a schematic diagram illustrating an operation state of the battery temperature control device when the temperature of the battery is an abnormal one and the passenger compartment is being cooled down.

Throughout the following detailed description, similar reference characters and numbers refer to similar elements in all figures of the drawings, and their descriptions are omitted for eliminating duplication.

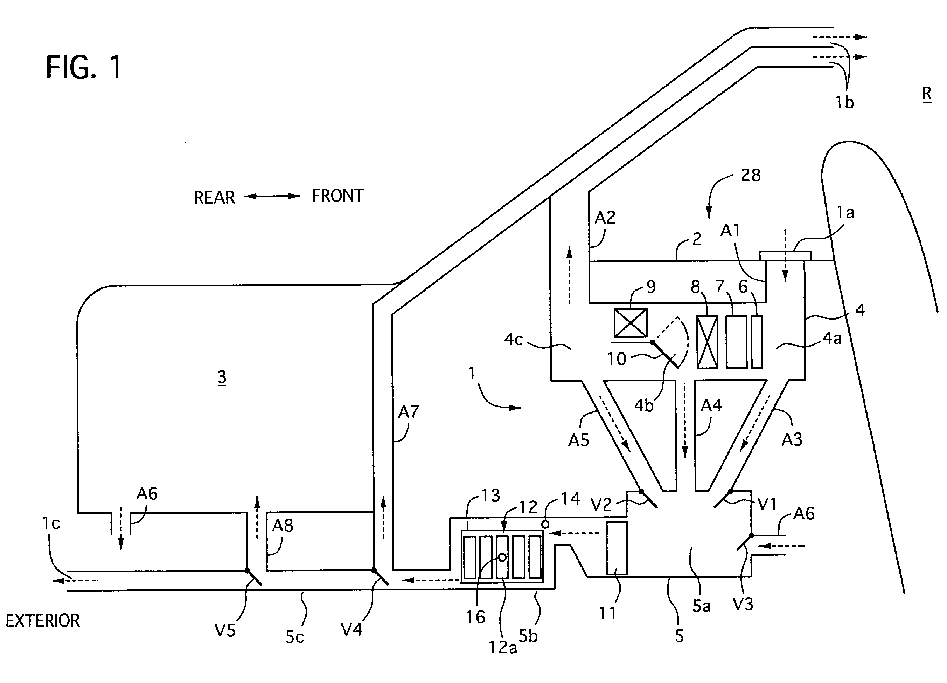

Referring to FIG. 1 of the drawing, there is shown a preferred embodiment of a battery temperature control device 1 of a vehicle according to the present invention.

The battery temperature control device 1 includes a first case 4 that is arranged near a luggage compartment 3 and under a rear parcel rack 2 located behind a rear seat 30, and a second case 5 that is arranged under the first case 4. Incidentally, the first case 4 and the second case 5 correspond to a vehicle-interior air guiding means of embodiments of the present invention.

The first case 4 is provided at one side thereof with a first air passage A1, which is communicated with a rear side portion of a passenger compartment R through an intake port 1 a that is formed in the rear parcel rack 2. Accordingly, the air in the passenger compartment R can be sucked in through the intake port 1 a and introduced into an upstream side portion 4a of the first case 4 through the first air passage A1.

At the upstream side portion 4a of the first case 4, there are provided an air-cleaning filter 6 and an air-conditioning fan 7 that is located at a downstream side of the air-cleaning filter 6. A rear-seat side evaporator 8 is provided at a downstream side of a blowout portion of the air-conditioning fan 7. Incidentally, the rear-seat side evaporator 8 corresponds to a cooling unit of embodiments of the present invention.

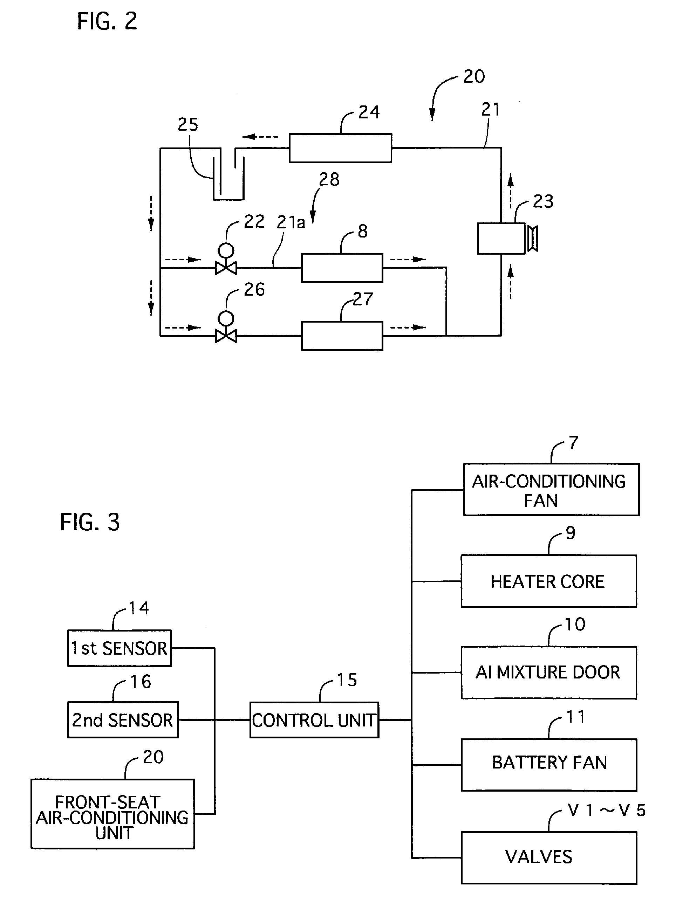

As shown in FIG. 2, the rear-seat side evaporator 8 and a rear-seat side expansion valve 22 are provided in a cooling medium passage circuit 21 a that diverges from a refrigeration cycle circuit 21 of a front-seat side air-conditioning unit 20. The vaporization heat is drawn from the air that is sucked in from the passenger compartment R by the air-conditioning fan 7, due to heat transfer between the air and the cooling medium that is decreased in pressure by the rear-seat side expansion valve 22.

The refrigeration cycle circuit 21 of the front-seat side air-conditioning unit 20 is constructed to have a compressor 23, a condenser 24, a receiver 25, a front-seat side expansion valve 26, an evaporator 27 and other elements which are not-shown.

The compressor 23 compresses the cooling medium so that the cooling medium is changed to a gas with a high temperature and a high pressure, and then it sends the gas to the condenser 24.

The condenser 24 cools the gas of the cooling medium outputted from the compressor 23 so that the gas is changed to liquid, and then it sends the liquid to the receiver 25.

The receiver 25 temporarily stores the extra cooling medium sent from the condenser 24, and it gas-liquid separates the cooling medium, then sends the cooling medium to the front-seat side expansion valve 26 in addition to the rear-seat side expansion valve 22.

The front-seat side expansion valve 26 decreases the pressure of the cooling medium received from the receiver 25 so that the cooling medium can easily evaporate under adiabatic expansion, and then it sends the cooling medium to the front-seat side evaporator 27.

The front-seat side expansion valve 26 vaporizes the cooling medium by heat exchanger between the cooling medium depressurized by the front-seat side expansion valve 25 and the air obtained from the interior or the exterior of the vehicle, and then it sends the cooling medium to the compressor 23. The front-seat side expansion valve 26 cools or warms the cooling medium by drawing the heat of evaporation from the air that is introduced from the exterior and heat-exchanged.

An intermediate portion 4b of the first case 4 is located at a downstream side of the rear-seat side evaporator 8, and it is provided with an air mixture door 10 so that it can adjust a ratio of the amount of the warm air that passes through a heater core 9 and the amount of the cold air that bypasses the heater core 9. Incidentally, the heater core 9 corresponds to a warm-air introducing means of embodiments of the present invention.

Referring to FIG. 1 again, the first case 4 is provided at the other side thereof with a downstream side portion 4c, which is communicated with the rear portion of the passenger compartment R through a second air passage A2 and a blowout port 1 b that is formed in a floor or a ceiling of the vehicle.

Thus, a rear-seat side air-conditioning unit 28 includes the first case 4, which has the upstream side portion 4a, the intermediate portion 4b, the downstream side portion 4c, the air cleansing filter 6, the air-conditioning fan 7, the rear-seat side evaporator 8 and the heater core 9, and the first air passage A1 with the intake port 1 a and the second air passage A2 with the blowout port 1 b.

Therefore, the rear-seat side air-conditioning unit 28 is constructed in such a way that the air is sucked in from the passenger compartment R by the air-conditioning fan 7 into the first air passage A1 through the intake port 1 a, then passing through the air-cleansing filter 6 and the rear-seat side evaporator 8. Then the air returns to the rear portion of the passenger compartment R through the blowout port 1 b of the second air passage A2 after the air mixture door 10 adjusts the rate of the amount of the warm air, which has passed through heater core 9, and the amount of the cool air that bypasses the heater core 9.

On the other hand, the second case 5 is disposed under the first case 4 and on a floor portion of the luggage compartment 3.

The second case 5 has an upstream side at one side portion, which is provided with a third air passage A3 that is communicated with the upstream side 4a of the first case 4. The third air passage A3 corresponds to a second air-conditioning means of embodiments of the present invention.

The third air passage A3 is provided with a first valve V1 that is capable of swinging/pivoting to adjust the amount of the air introduced from the passenger compartment R through the upstream side portion 4a of the first case 4 to the upstream side portion 5a of the second case 5.

In addition, a fourth air passage A4 is provided near the third air passage A3 so as to communicate the second case 5 with the intermediate portion 4b of the first case 4. The fourth air passage A4 corresponds to a first air-conditioning means of embodiments of the present invention.

Further, a fifth air passage A5 is provided near the fourth air passage A4 to communicate the second case 5 with the downstream side portion 4c of the first case 4. The fifth air passage A5 corresponds to the warm-air introducing means and the first air-conditioning means of embodiments of the present invention.

The fifth air passage A5 is provided with a second valve V2 that is capable of swinging to adjust the amount of the air introduced from the passenger compartment R to the upstream side portion 5a of the second case 5 through the downstream side portion 4c of the first case 4.

Further, the upstream side portion 5a of the second case 5 is provided with a sixth air passage A6 that communicates the upstream side portion 5a with the luggage compartment 3.

The sixth air passage A6 is provided with a third valve V3 that is capable of swinging/pivoting to adjust the amount of the air introduced from the luggage compartment 3 to the upstream side portion 5a of the second case 5 through the upstream side portion 4a of the first case 4. Incidentally, the sixth air passage A6 corresponds to a luggage-compartment air introducing means of embodiments of the present invention.

The luggage compartment 3 is communicated with the exterior of the vehicle through minute gaps formed by a trunk hood and others, and accordingly the pressure in the luggage compartment 3 maintains substantially equal to the atmosphere pressure. Accordingly, the air sucked in from the luggage compartment 3 to the upstream side portion 5a of the second case 5 can be estimated as the atmosphere pressure.

The upstream side portion 5a of the second case 5 contains a battery fan 11, which is located at a downstream side of the third to sixth air passages A3 to A6.

In an intermediate portion 5b of the second case 5, a battery 12 is arranged at a downstream side of the battery fan 11 so as to be supplied with the air.

The battery 12 is a secondary battery, namely a rechargeable battery, that has a capacity of supplying electric power to an electric motor to run the vehicle, and other electric motors mounted thereon. The battery 12 employs a nickel-cadmium battery, a nickel hydride battery, a lithium-ion battery or the like, and the battery 12 used in the embodiment has a plurality of battery modules 12a that are piled up at predetermined intervals. They are contained in a battery package 13 that is interposed in the second case 5.

Thus, the air is introduced by the battery fan 11 from the upstream side portion 5a of the second case 5 to flow through the battery package 13, so that the air passes through the predetermined intervals formed between the adjacent battery modules 12a. The heat is exchanged there between the air and the batter modules 12a, and then air is discharged toward a downstream side of the battery package 13.

A first temperature sensor 14 is provided at an inlet port of the battery package 13 to detect the atmosphere temperature thereof, and a second temperature sensor 16 is provided on the battery module 12a to detect the surface temperature or the atmosphere temperature of the battery 12. The second battery sensor 16 may be attached on each battery module 12a, while the positions thereof may be set appropriately.

At a downstream side portion 5c of the second case 5, a vehicle-exterior discharge port 1 c is provided to communicate the downstream side portion 5c with the exterior of the vehicle. The vehicle-exterior discharge port 1 c corresponds to an air discharging means of embodiments of the present invention.

The downstream side portion 5c of the second case 5 is communicated at an intermediate portion thereof with a seventh air passage A7 that communicates the downstream side portion 5c with the passenger compartment R through the blowout port 1 b. The seventh air passage A7 corresponds to an air refluxing means of embodiments of the present invention.

The seventh air passage A7 is provided with a fourth valve A4 that is capable of swinging/pivoting to adjust the amount of the air from the downstream side portion 5c of the second case 5 to the rear portion of the passenger compartment R. The entire amount of the air, which has flown through the downstream side portion 5a toward the vehicle-exterior discharge port 1 c, passes through the seventh air passage A7 when the fourth valve V4 is fully opened.

In addition, an eighth air passage A8 is provided near the seventh air passage A7 to communicate the downstream side portion 5c with the luggage compartment 3.

The eighth air passage A8 is provided with a fifth valve A5 that is capable of swinging/pivoting to adjust the amount of the air from the downstream side portion 5c of the second case 5 to the luggage compartment 3. The entire amount of the air, which has flown through the downstream side portion 5a toward the vehicle-exterior discharge port 1c, passes through the eighth air passage A8 when the fifth valve V5 is fully opened.

As shown in FIG. 3, there is provided a control system of the battery temperature control device, where a control unit 15 is electrically connected to the first temperature sensor 14, the second temperature sensor 16, the air conditioning fan 7, the heater core 9, the air mixture door 10, the battery fan 11 and the first to fifth valves V1 to V5. The control unit 15 is also electrically connected to a control unit of a front-seat side air conditioning unit 20, ant it receives temperature signals outputted from the first and second temperature sensors 14 and 16 and a control signal outputted from the control unit of the front-seat side air conditioning unit 20 to execute the air-conditioning control for the rear portion of the passenger compartment R and the temperature control of the battery 12.

Incidentally, the control, which will be described below, executed by the control unit 15 can be carried out only in a case where the front-seat side air conditioning unit 20 is activated, similarly to the cases of the conventional air-conditioning systems.

The air-conditioning control, which is carried out by the control unit 15, of the rear portion of the passenger compartment R will be described.

In order to cool the rear portion of the passenger compartment R, first, the first to third valves V1 to V3 are controlled to fully close, and the air-conditioning fan 7 is driven so that the air is sucked in from the passenger compartment R through the intake port 1 a. The air is introduced into the upstream side portion 4a of the first case 4 through the first air passage A1. In this process, the heater core 9 is activated when it is needed.

Then the sucked air passes through the air cleansing filter 6 and the rear-seat side evaporator 8, and then it is adjusted by a swing/pivot operation of the air mixture door 10 to have a temperature corresponding to a target blowout temperature that is set with the front-seat side air-conditioner unit 20, to obtain the cool air. This cool air is blown out in the rear portion of the passenger compartment R through the blowout port 1 b of the second air passage A2. As a result, the temperature in the rear portion of the passenger compartment R falls toward the target blowout temperature.

In order to circulate the air by the rear-seat side air- conditioner unit 20, the first to third valves V1 to V3 are controlled to fully close, the air-conditioning fan 7 is driven to suck the air in the rear portion of the passenger compartment R through the intake port 1 a. The air is introduced into the upstream side portion 4a of the first case 4 through the first air passage A1.

Then the sucked air passes through the air cleansing filter 6 and the rear-seat side evaporator 8, and then it is adjusted by a swing/pivot operation of the air mixture door 10 to have a temperature corresponding to the target blowout temperature that is set with the front-seat side air-conditioner unit 20, to obtain the temperature-adjusted air. This air is blown out to the rear portion of the passenger compartment R through the blowout port 1b of the second air passage A2 to circulate between the passenger compartment R and the first case 4.

On the other hand, in order to warm the passenger compartment R with the front-seat air-conditioning unit 20, the first to third valves V1 to V3 are controlled to fully close, and the air-conditioning fan 7 is driven so that the air compartment R is sucked in from the passenger through the intake port 1 a. At the same time, the heater core 9 is activated to warm the air that passes therethrough. The air is introduced into the upstream side portion 4a of the first case 4 through the first air passage A1.

Then the sucked air passes through the air cleansing filter 6 and the rear-seat side evaporator 8, and then it is adjusted by a swing/pivot operation of the air mixture door 10 to have a temperature, corresponding to the target blowout temperature that is set with the front-seat side air-conditioner unit 20, to obtain the warm air. This warm air is blown out to the rear portion of the passenger compartment R through the blowout port 1b of the second air passage A2. As a result, the temperature in the rear portion of the passenger compartment R rises toward the target blowout temperature.

Next, the battery temperature control that is executed by the control unit 15 will be described.

It is preferred that the temperature of the battery 12 be maintained in a predetermined temperature range in view of the decay of durability thereof and the discharge output performance thereof.

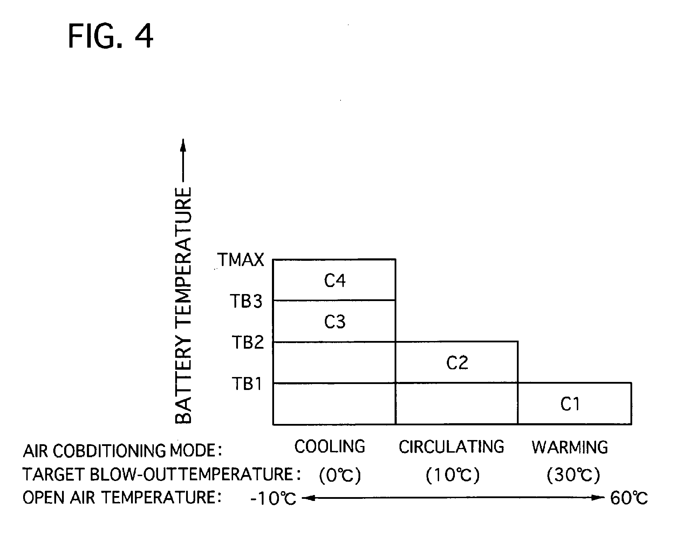

Therefore, as shown in FIG. 4, in order to maintain the battery temperature TB between a lower predetermined battery temperature TB1 and an upper predetermined battery temperature TB2, it is preferred that an inlet-port temperature of the battery package 13, which is substantially equal to the temperature Ta detected by the first temperature sensor 14, be maintained between a lower predetermined temperature Ta1 and an upper predetermined temperature Ta2.

Therefore, in the embodiment, the control unit 15 continuously surveillances the temperature of the battery 12 to execute the battery temperature control. Instead of directly detecting the temperature of the battery 12, it may be calculated based on a heat value of the battery modules 12a.

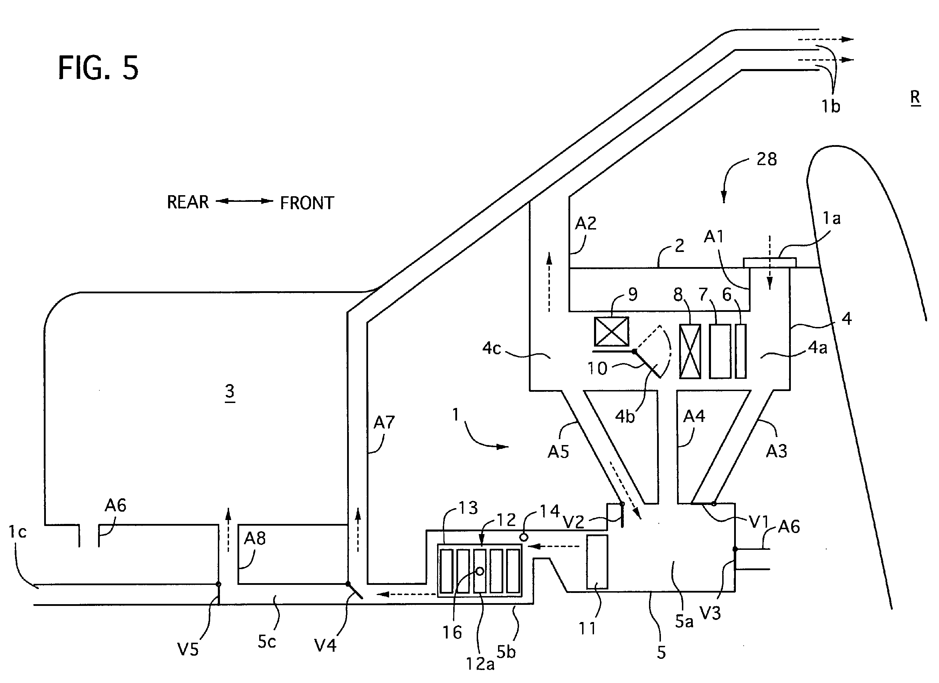

When the temperature TB of the battery 12 is low than the lower predetermined temperature TB1 (when the temperature TB is in a rage C1 in FIG. 5) and the front-seat side air-conditioning unit 20 is set to warm the passenger compartment R in a case where an engine is started in winter, the second, fourth and fifth valves V2, V4 and V5 are controlled to fully open, the fourth valve V4 is controlled to partially open, and the first and third valves V1 and V3 are controlled to fully close as shown in FIG. 5. At the same time, the battery fan 11 is driven.

As a result, the battery fan 11 sends the appropriate amount of the warm air, at 30°C for example, to the battery 12 through the fifth air passage A5, so that the battery 12 is warmed up by the warm air passing therethrough.

Some of the air that has passed through the battery 12 is returned into the rear portion of the passenger compartment R through the seventh air passage A7, and the rest of the air is introduced into the luggage compartment 3 through the eighth air passage A8. Accordingly, warming-up of the both compartments R and 3 improves the heating efficiency of the rear portion of the passenger compartment R.

Incidentally, when the temperature TB of the battery 12 rises to approach the lower predetermined temperature TB1, the fifth valve V5 is temporally closed. As a result, the battery 12 can be communicated with the exterior of the vehicle. This causes its speed of the temperature rising to the lower predetermined temperature TB1 to become moderate, so that the temperature thereof can be properly adjusted.

Then when the temperature of the battery 12 becomes substantially equal to the lower predetermined temperature TB1, the fifth valve V5 is controlled to have an appropriate opening angle and timing thereof so that the battery 12 can be communicated with the exterior of the vehicle to be maintained within the lower and upper predetermined temperatures TB1 and TB2.

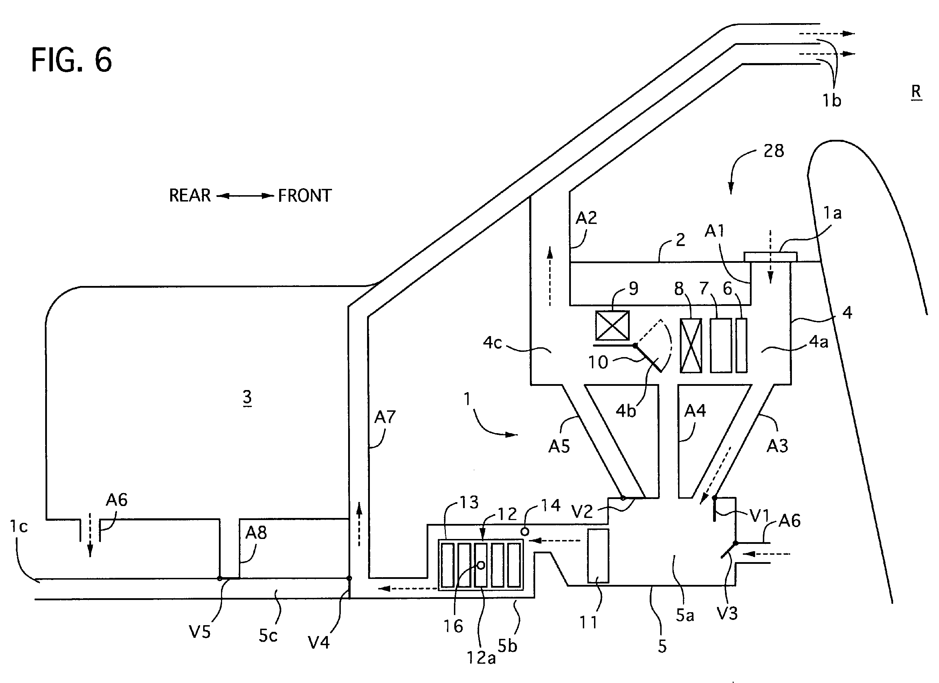

When the temperature TB of the battery 12 is within the lower and upper predetermined temperatures TB1 and TB2 (when the temperature TB is in a range C2 in FIG. 4) and the air is being circulated between the passenger compartment R and the first case 4, the first and fourth valves V1 and V4 are controlled to fully open, the second and fifth valves V2 and V5 are controlled to fully close, and the third valve V3 is controlled to have an appropriate opening angle and timing thereof as shown in FIG. 6. At the same time, the battery fan 11 is driven.

As a result, the appropriate amount of the air, at 10°C for example, induced via the first and third air passages A1 and A3 passes through the battery 12 to cool or warm the battery 12, and then it returns to the rear portion of the passenger compartment R via the seventh air passage A7. In this operation, the temperature of the air at the downstream side of the battery 12 is estimated in advance, and the third valve V3 is controlled to have an appropriate opening angle and timing thereof to mix the air from the passenger compartment R and the air from the luggage compartment 3 in the upstream side portion 5a of the second case 5 so that the estimated temperature Ta3 of the air becomes substantially equal to the same one of the air retuning to the rear portion of the passenger compartment R via the second air passage A2.

The estimated temperature Ta3 of the air that has passed through the battery 12 is calculated by using an equation: the heat value of the battery 12 = mass of the air×(Ta - Ta3).

Accordingly, the above-described control can decrease time for adjusting the temperature of the air that returns to the rear portion of the passenger compartment R, avoiding lack of stability of the temperature in the passenger compartment R due to mix-up of the air that returns to the rear portion of the passenger compartment R via the seventh air passage A7 after passing through the battery 12 and the air that returns to the rear portion of the passenger compartment R via the second air passage A2.

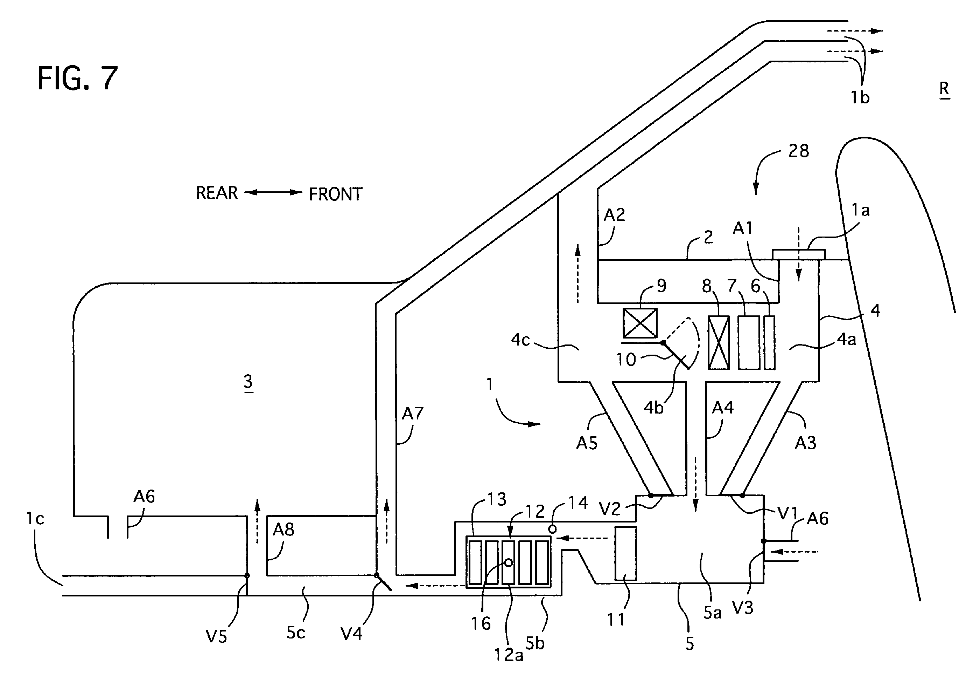

On the other hand, in order to cool the rear portion of the passenger compartment R when the temperature of the battery 12 is high, namely larger than the upper predetermined temperature TB2 and smaller than a predetermined limit temperature TB3 (= TB2 + a) (when the temperature thereof is within a range C3 in FIG. 4) in a case of traffic jam in summer for example, the fourth and fifth valves V 4 and V5 are controlled to partially and fully open, respectively, and the first to third valves V1 to V3 are controlled to fully close as shown in FIG. 7. At the same time, the battery fan 11 is driven.

As a result, the appropriate amount of the cooling air can pass through the battery 12 via the fourth air passage A4 to cool the battery 12. Then the air that has passed through the battery 12 can return to the rear portion of the passenger compartment R through the seventh air passage A7, and the rest amount thereof can be introduced into the luggage compartment 3 through the eighth air passage A8. Therefore, the passenger compartment R can be efficiently cooled down.

When the temperature TB of the battery 12 approaches the upper predetermined temperature TB2, the fifth valve V5 is controlled to temporarily close so that the battery 12 can be communicated with the exterior o the vehicle. Thus the speed rate of falling the temperature TB can be moderate, and accordingly the temperature TB of the battery 12 can be properly adjusted.

Then when the temperature TB becomes substantially equal to the upper predetermined temperature TB2, the fifth valve V5 is controlled to have the appropriate opening angle and timing so that the battery 12 is communicated with the exterior of the vehicle. Therefore, the temperature TB of the battery 12 is maintained within the lower and upper predetermined temperatures TB1 and TB2.

On the other hand, in order to cool the rear portion of the passenger compartment R when the temperature TB of the battery 12 is an abnormal temperature (when the temperature TB is equal to or larger than the predetermined limit temperature TB3, namely in a range C4 in FIG. 4, where TMAX indicated in FIG. 4 is the possible highest temperature), the first to third valves V1 to V3 are controlled to fully close so that the battery 12 is cooled down.

In this operation, the fourth and fifth valves V4 and V5 are also controlled to fully close so that the entire amount of the air that has passed through the battery 12 is discharged to the exterior of the vehicle through the vehicle-exterior discharge port 1 c. This can prevent the passenger compartment R from the entrance of gas generated by vaporization of electrolysis solution in the battery 12 due to the abnormal temperature, by means of intermediately discharging the gas to the exterior of the vehicle even when it is generated when this abnormal temperature occurs.

Next the advantages of the battery control device of the embodiment will be described.

In the battery control device of the embodiment, in a case where the temperature TB is low and the warm air is supplied to the passenger compartment R (in the range C1 in FI. 4), the battery 12 can be warmed up by the warm air, thereby suppressing a reduction in electric discharge output. Therefore, the electric discharge output can be stably obtained, and the warming-up time of the battery 12 can be shortened.

In addition, the air that has passed through the battery 12 is introduced into the rear portion of the passenger compartment R and the luggage compartment 3. Therefore the air can efficiently warm the passenger compartment R, preventing the pressure therein being negative.

When the temperature TB of the battery 12 is within the lower and upper predetermined temperatures TB1 and TB2 and the air is being circulated between the passenger compartment R and the first case 4 (in the range C2 in FIG. 4), both of the air from the passenger compartment R and the air from the luggage compartment 3 pass through the battery 12 to cool or warm it. Therefore, the temperature TB thereof can be maintained within the lower and upper predetermined temperatures TB1 and TB2, and the electric discharge output can be stably obtained.

In addition, the air that has passed through the battery 13 returns into the rear portion of the passenger compartment R. Therefore, this returned air can prevent the pressure in the passenger compartment R from being negative.

Further, the temperature of the air that returns to the rear portion of the passenger compartment R via the seventh air passage A7 is controlled to be set equal to that of the air that returns to the rear portion of the passenger compartment R via the second air passage A2. The temperature in the passenger compartment R can be stably maintained in the case where the battery 12 is being cooled down and in the case where the battery 12 is being warmed up.

When the temperature TB of the battery 12 is high and the passenger compartment R is being warmed up (in the range C3 in FIG. 4), the cool air passes through the battery 12 to cool it, suppressing the reduction in the electric discharge output. Therefore, the cooling time of the battery 12 can be shortened, and the electric discharge output can be stably obtained.

In addition, the air that has passed through the battery 12 is introduced into the rear portion of the passenger compartment R and the luggage compartment 3. Therefore this returned air can efficiently cool the passenger compartment R, preventing the pressure therein being negative.

When the temperature TB of the battery 12 is the abnormal one and the passenger compartment R is being cooled down (in the rage C4 in FG. 4), the cool air passes through the battery 12 to cool it, suppressing the reduction in the electric discharge output. Therefore, the cooling time of the battery 12 can be shortened, and the electric discharge output can be stably obtained.

In addition, the entire amount of the air that has passed through the battery 12 is discharged to the exterior of the vehicle. The passenger compartment R can be prevented from the entrance of gas generated by vaporization of electrolysis solution in the battery 12 due to the abnormal temperature thereof, by means of intermediately discharging the gas to the exterior of the vehicle even when it is generated when this abnormal temperature occurs.

While there have been particularly shown and described with reference to the preferred embodiment thereof, it will be understood that various modifications may be made therein.

For example, the battery temperature control is carried out by using the rear-seat side air-conditioning unit 28 in the embodiment, but it may be carried out only by using the front-seat side air-conditioning unit 20. In the latter case, the battery 12 may be arranged in a front portion of the vehicle, namely in an engine room.

## Claims

1. A battery temperature control device of a vehicle comprising:
a battery (12) mounted on the vehicle;
a vehicle-interior side air introducing means (4, 5) that is capable of introducing air from a passenger compartment (R) of the vehicle;
a cooling unit (8) that is disposed in the vehicle-interior side air introducing means (4, 5) to cool the air;
an air refluxing means (A7) that is capable of refluxing the air that has passed through the battery (12) to the passenger compartment(R); and
a control unit (15) that is capable of controlling the air refluxing means to allow and forbid a communication between the air refluxing means (A7) and the passenger compartment (R) according to a temperature (TB) of the battery (12).

2. The battery temperature control device according to claim 1, further comprising:
an air discharging means (1c) that is capable of discharging the air that has passed through the battery (12) to an exterior of the vehicle when the temperature (TB) of the battery (12) is higher than an upper predetermined temperature (TB2).

3. The battery temperature control device according to claim 2, wherein
the air discharging means (1c) discharges the air that has passed through the battery (12) to the exterior of the vehicle when the temperature (TB) of the battery (12) becomes not less than a predetermined limit temperature (TB3) that is higher than the upper predetermined temperature (TB2).

4. The battery temperature control device according to any one of claims 1 to 3, further comprising:
a warm-air introducing means (9, A5) that is capable of introducing the air that is warmed up to the battery (12).

5. The battery temperature control device according to any one of claims 1 to 4, further comprising:
a luggage-compartment air introducing means (A6) that is capable of introducing the air in a luggage compartment (3) of the vehicle.

6. The battery temperature control device according to any one of claims 1 to 5, wherein
the vehicle-interior side air introducing means (4, 5) has a first air-conditioning means (A4, A5) that is capable of introducing the air from the passenger compartment (R) to the battery (12) through the cooling unit (8) and a second air-conditioning means (A3) that is capable of flowing through the battery (12), bypassing the cooling unit(8).

7. The battery temperature control device according to claim 5 or claim 6, wherein
the vehicle-interior side air introducing means (4, 5), the warm-air introducing means (9, A5) and the luggage-compartment air introducing means (A6) are provided with valves (V1, V2, V3, V4, V5) that are controlled to adjust amounts of the air to be introduced to the battery (12), respectively, and wherein
the control unit (15) is configured to control the valves (V1, V2, V3, V4, V5) so that the temperature of the battery (12) is within a lower predetermined temperature (TB1) and the upper predetermined temperature (TB2).

8. The battery temperature control device according to any one of claims 4 to 7, further comprising:
a front-seat side air-conditioning unit (20) and a rear-seat side air-conditioning unit (28), wherein
the vehicle-interior side air introducing means (4, 5) and the warm-air introducing means (9, A5) constitute one of the rear-seat side air-conditioning unit (28) and a part of the rear-seat side air-conditioning unit (28).

9. The battery temperature control device according to claim 8, wherein
in a case where the air is being circulated between the vehicle-interior side air introducing means (4, 5) and the passenger compartment (R), the control unit (15) is configured to control the temperature (TB) of the air that has passed through the battery (12) and returns to the passenger compartment (R) through the air refluxing means (A7) to correspond to the temperature (TB) of the air that directly returns to the passenger compartment (R) from the one of the rear -seat side air-conditioning unit (28) and a part of the rear-seat side air-conditioning unit (28).
